# EUROPÄISCHE PATENTSCHRIFT

(11) **EP 0 902 802 B1**
(45) Veröffentlichungstag und Bekanntmachung des Hinweises auf die Patenterteilung: **22.03.2000**
(21) Anmeldenummer: 96943073.5
(22) Anmeldetag: 10.12.1996
(51) Int. Cl.: C08G 69/28, C08G 69/04, C08G 69/36

(54) **VERFAHREN UND VORRICHTUNG ZUR KONTINUIERLICHEN HERSTELLUNG VON POLYAMIDEN**
PROCESS AND DEVICE FOR CONTINUOUS PRODUCTION OF POLYAMIDES
PROCEDE ET DISPOSITIF POUR LA PRODUCTION EN CONTINU DE POLYAMIDES

(30) Priorität: 24.05.1996 DE 19621088
(43) Veröffentlichungstag der Anmeldung: 24.03.1999
(73) Patentinhaber: POLYMER ENGINEERING GmbH, 07407 Rudolstadt (DE)
(72) Erfinder: WILTZER, Karlheinz, D-07422 Bad Blankenburg (DE); SCHUSTER, Mattias, D-07422 Bad Blankenburg (DE); EBERT, Baldur, D-07422 Bad Blankenburg (DE)
(74) Vertreter: Feldkamp, Rainer, Dipl.-Ing.
(86) Internationale Anmeldenummer: EP9605513
(87) Internationale Veröffentlichungsnummer: WO9745472

(56) Entgegenhaltungen:
- EP-A- 0 393 548
- DE-A- 2 417 003
- DATABASE WPI Section Ch, Week 8550 Derwent Publications Ltd., London, GB; Class A23, AN 85-313225 XP002031202 & JP 60 217 238 A (TORAY IND INC) , 30.Oktober 1985

## Beschreibung

Die Erfindung betrifft ein Verfahren und eine Vorrichtung zur Durchführung des Verfahrens zur kontinuierlichen Herstellung von Polyamiden, deren monomeres Ausgangsmaterial bis zu 100% aus adipinsaurem Hexamethylendiamin und Wasser besteht.

Für die Polymerisation von adipinsaurem Hexamethylendiamin (AH-Salz) oder Adipinsäure und Hexamethylendiamin wird bekannterweise als Ausgangsprodukt eine wäßrige AH-Salzlösung, die in einem Druckreaktor auf eine Temperatur im Bereich von 220 - 280° C erwärmt wird, eingesetzt, mit dem Ziel, ein AH-Vorkondensat herzustellen, bei welchem die NH₂-Gruppen des Hexamethylendiamins mit den COOH-Gruppen der Adipinsäure reagiert haben.

Es ist bekannt, daß die wäßrige adipinsaure Hexamethylendiaminlösung unter einem Druck, der kleiner als der aus der Lösung entstehende Dampfdruck ist, bei gleicherzeitiger Verdampfung des Wassers erwärmt wird, das am leichtesten flüchtige, ausgetriebene Hexamethylendiamin in einer Kolonne zurückgehalten und dem Polymerisationsprozeß wieder zugeführt wird (US-PS 2 689 839; US-PS 3 960 820). Bei der Entspannung eines solchen Vorkondensats kann Hexamethylendiamin in geringem Umfang entweichen. Zum Ausgleich des viskositätsabsenkenden Säureüberschusses wird Hexamethylendiamin im Überschuß zugesetzt (US 3 193 535; DE 2 417 003). Eine Entwässerung und Nachkondensation der Polyamidschmelze wird nach bekannten Verfahren vorgenommen.

Die Aufgabe der Erfindung besteht darin, durch die geschlossene Fahrweise des Polymerisationsreaktors unter dem vollen, sich bei entsprechender Reaktionstemperatur einstellenden Druck, die vollständige Umsetzung der NH₂-Gruppen des Hexamethylendiamins und der COOH-Gruppen der Adipinsäure zu erreichen.

Diese Aufgabe wird durch die im Patentanspruch 1 angegebenen Merkmale gelöst. Vorteilhafte Ausgestaltungen und Weiterbildungen der Erfindung ergeben sich aus den Unteransprüchen.

Bei dem erfindungsgemäßen Verfahren wird die erste Verfahrensstufe unter Druck bei Temperaturen zwischen 180 und 280 Grad Celsius geschlossen durchgeführt und nach dem Durchlaufen wird anschließend das Polyamid weiteren Verfahrensstufen zugeführt, in welchen jeweils zu Beginn dieser Stufen das verdampfte Wasser entfernt oder mit Inertgas ausgetrieben wird.

Die Prozeßführung bei der kontinuierlichen Herstellung von Polyamiden wurde erfindungsgemäß so gestaltet, das Polyamid 6,6 und Copolyamid vom Typ Polyamid 6 / Polyamid 6,6 in den beschriebenen Behandlungsstufen hergestellt werden kann.

In einem solchen Polymerisationsreaktor werden die folgenden Verfahrensstufen durchgeführt:
a) Vorwärmung der Ausgangsprodukte,
b) Polymerisation der Ausgangsprodukte in einer Druckstufe ohne Wasseraustreibung zu einem Vorpolymerisat bzw. Vorkondensat, vorzugsweise bei einer Temperatur von 180 bis 220 Grad Celsius,
c) Entwässerung des Vorpolymerisats bzw. Vorkondensats in einer ein- bis fünfgängigen Rohrschlange, in welcher ein gezielter, langsamer Druckabbau erfolgt, wobei die Rohrschlange so gestaltet wurde, daß sowohl höherviskoses Vorpolymerisat als auch das unter einem höheren Druck stehende niederviskose Vorkondensat problemlos in den nachfolgenden Druckreaktor gefördert oder gedrückt werden kann,
d) Behandlung des Zwischenprodukts in einem zweiten Druckreaktor mit Wasseraustreibung, wobei das bei der Herstellung von Copolyamid vom Typ Polyamid 6 / Polyamid 6,6 mit ausgetriebene Lactam in einer Rektifizierkolonne direkt in die Druckstufe zurückgeführt wird,
e) weitere Entwässerung der polymeren Schmelze wie unter c) beschrieben und Zuführung der polymeren Schmelze zu einem ersten Nachkondensationsreaktor,
f) erste Nachkondensation in einem senkrechten Reaktor bei Temperaturen im Bereich von etwa 210 - 285° C und bei einer Prozeßführung von oben nach unten, indem dünne Schmelzefilme gebildet und das für den weiteren Polymerisationsprozeß nicht mehr benötigte Wasser ausgetrieben wird,
g) weitere Nachkondensation der Schmelze in nachgeschalteten Reaktoren, sobald hohe Viskositäten zu erreichen sind.

Die Erfindung soll anhand nachstehend aufgeführter Ausführungsbeispiele und unter Verwendung einer Zeichnung näher erläutert werden.

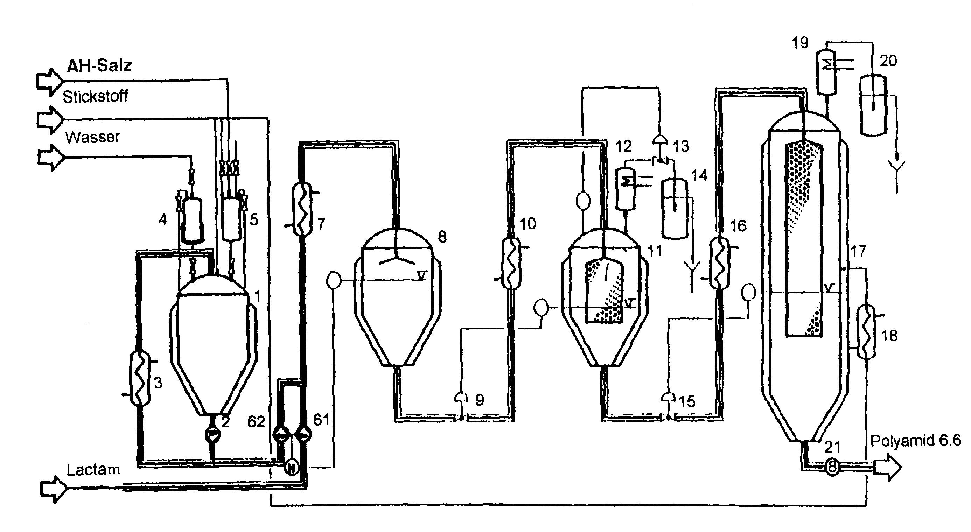

Die Zeichnung zeigt in einer schematischen Darstellung die erfindungsgemäße Anordnung der Verfahrensstufen für die kontinuierliche Herstellung von Polyamiden.

### Ausführungsbeispiel 1

Es wird hier ein Verfahren und eine Vorrichtung beschrieben, wobei adipinsaures Hexamethylendiamin (AH-Salz) zu Polyamid 6,6 umgesetzt wird. Im Lösegefäß 1 werden dazu 80 % AH-Salz und 20 % Wasser aufgeschmolzen. Eine Zuführung der Aufschmelzwärme erfolgt über den Wärmetauscher 3 durch Führung des Ansatzes über diesen mittels der Pumpe 2. Die Zuführung von Wasser und AH-Salz in das Lösegefäß 1 erfolgt diskontinuierlich. Im Zwischengefäß für Wasser 4 wird Wasser auf 100°C aufgeheizt und im Behälter für AH-Salz 5 wird die notwendige Menge an AH-Salz vorgelegt. Durch Öffnen der Auslaßventile gelangt das vorgewärmte Wasser in das Lösegefäß 1 und nachdem der Druckausgleich hergestellt ist, fällt das AH-Salz unter Wirkung der Schwerkraft in den Aufschmelzteil des Lösegefäßes 1. Das Lösegefäß 1 ist immer inertisiert. Die Beheizung des Lösegefäßes 1, des Wärmetauschers 3 und des Zwischengefäßes für Wasser 4 erfolgt über einen Wärmeträger. Dem Produktionskreislauf wird kontinuierlich mit dem Pumpenkopf 6,2 die für den Polymerisationsprozeß notwendige wäßrige AH-Salzlösung entnommen. Vor Eintritt in den Druckreaktor 8 wird die wäßrige AH-Salzlösung im Wärmetauscher 7 vorgewärmt. Im Druckreaktor 8, der ohne Entgasung gefahren wird, stellt sich ein Druck von 26 bar (ü) ein. Das so hergestellte niederviskose Polymerisat mit einer Lösungsviskosität von 1,09 wird durch den im Druckreaktor 8 herrschenden Druck niveaugeregelt über das Regelventil 9 und die Schmelzetrocknungsstrecke 10 in einen zweiten Druckreaktor 11 gefördert.

In der Schmelzetrocknungsstrecke 10 wird das Vorpolymerisat auf 280° C erwärmt, wobei gleichzeitig das im Überschuß vorhandene Wasser verdampft wird. Dieses Vorpolymerisat wird im Druckreaktor 11 auf einen Druck von 3 bar (ü) entspannt, wobei zur besseren Wasserausgasung das Vorpolymerisat über eine Entgasungsfläche geführt wird. Das überschüssige Wasser wird druckgeregelt über das Regelventil 13 und die Abtauchung 14 aus dem Prozeß abgeführt. Die Rektifizierkolonne 12 wird bei diesem Verfahren nicht betrieben und ist auf Durchgang geschaltet. In dieser Druckstufe entsteht ein Polymerisat mit einer Lösungsviskosität von 1,5. Dieses Polymerisat wird niveaugeregelt über das Regelventil 15 und die Schmelzetrocknungsstrecke 16 in einen Nachkondensationsreaktor 17 gefördert, der unter Normaldruck arbeitet. In der Schmelzetrocknungsstrecke 16 wird das noch im Überschuß vorhandene Wasser verdampft, das auf der Entgasungsfläche im Nachkondensationsreaktor 17 aus der Schmelze ausgetrieben wird.

Zum Austreiben dieses Wassers wird heißer Stickstoff, der im Wärmetauscher 18 vorgewärmt wurde, durch den Nachkondensationsreaktor 17 geleitet. Stickstoff und Wasser werden über die Abtauchung 20 aus dem Prozeß abgeführt. Die Rektifizierkolonne 19 wird bei diesem Verfahren nicht betrieben und ist wie am Druckreaktor 11 auf Durchgang geschaltet.

Es wird eine Polyamid 6,6-Schmelze, die eine Lösungsviskosität von 2,6 aufweist, mittels Austragspumpe 21, einer Zahnradpumpe, aus dem Nachkondensationsreaktor 17 ausgetragen.

Anstelle einer 80 %-igen wäßrigen AH-Salzlösung kann auch eine wäßrige AH-Salzlösung mit einer handelsüblichen Konzentration von 60 % eingesetzt werden, wodurch der vorangehend beschriebene Löseprozeß vor dem Pumpenkopf 6,2 entfallen würde. Dieser Vorteil ist jedoch verbunden mit einem erheblichen größeren Energiebedarf.

### Ausführungsbeispiel 2

Es soll ein Polyamid 6,6 mit einer Lösungsviskosität von 3,3 hergestellt werden. Eingesetzt wird eine etwa 60 %-ige wäßrige AH-Salzlösung, die im Lösegefäß 1 bei einer Produkttemperatur von 90° C gelagert wird. Mit dem Pumpenkopf 6,2 wird die AH-Salzlösung direkt aus dem Lösegefäß 1, über den Wärmetauscher 7, wie bereits im Ausführungsbeispiel 1 beschrieben, in den Druckreaktor 8 gefördert. Da kein ε-Caprolactam gefördert wird, ist der Kolbenhub des Pumpenkopfes 6,1 auf 0 gestellt. Es folgt die gleiche technologische Einstellung und Verfahrensweise wie im Ausführungsbeispiel 1 beschrieben.

Um die Lösungsviskosität am Austritt des Nachkondensationsreaktors 17 von 2,6 auf 3,3 anzuheben, ist das Zuschalten von zwei weiteren Nachkondensationsreaktoren analog der Ausführung des Nachkondensationsreaktors 17 notwendig.

### Ausführungsbeispiel 3

Aus ε-Caprolactam und AH-Salz soll erfindungsgemäß ein Copolyamid hergestellt werden. Es wird eine 60 %-ige wäßrige AH-Salzlösung eingesetzt, die im Lösegefäß 1 gelagert wird. Das ε-Caprolactam wird einem Lagertank entnommen. Beide Produkte werden mit einer Doppelkolbenpumpe gefördert. Die Dosierung des ε-caprolactams erfolgt mit dem Pumpenkopf 6,1 und der wäßrigen AH-Salzlösung mit dem Pumpenkopf 6,2. Vor Eintritt in den Wärmetauscher 7 werden beide Produkte miteinander vermischt. Es werden 70 % AH-Salz und 30 % ε-Caprolactam dosiert, welche im Wärmetauscher 7 vorgewärmt werden.

Nach einer bevorzugten Ausführungsform sind jedoch im allgemeinen auch ε-Caprolactam-Konzentrationen von 1 bis 99% denkbar.

Die weitere Verfahrensweise erfolgt bis auf das Betreiben der Rektifizierkolonnen 12 und 19 analog Beispiel 1.

In den Rektifizierkolonnen 12 und 19 erfolgt eine Trennung des Gasgemisches. ε-Caprolacm läuft in den Reaktor zurück, Wasser und gegebenenfalls Stickstoff verlassen den Polymerisationsprozeß.

Im Druckreaktor 8 stellt sich ein Druck von 24 bar (ü) ein. Man erhält ein Vorpolymerisat mit einer Lösungsviskosität von 1,13. Nach dem Druckreaktor 11 hat das Polymerisat eine Lösungsviskosität von 1,6 und nach dem Nachkondensationsreaktor 17 eine Lösungsviskosität von 2,6. Der Schmelzpunkt liegt bei 195° C.

## Patentansprüche

1. Verfahren zur kontinuierlichen Herstellung von Polyamiden oder Copolyamiden, deren monomeres Ausgangsmaterial aus adipinsaurem Hexamethylendiamin und Wasser oder aus adipinsaurem Hexamethylendiamin, Wasser und ε-Caprolactam besteht,
dadurch gekennzeichnet,
daß eine erste Verfahrensstufe unter Druck bei Temperaturen zwischen 180 und 280° C geschlossen durchgeführt wird und nach dem Durchlauf anschließend das Polyamid einer weiteren Druckstufe und einer oder mehreren Nachkondensationsstufen zugeführt wird, wobei jeweils zu Beginn dieser Stufen das verdampfte Wasser entfernt oder mit Inertgas ausgetrieben wird.

2. Verfahren nach Anspruch 1,
dadurch gekennzeichnet,
daß bei der Herstellung eines Copolyamids unter Zusatz von ε-Caprolactam mit einem Anteil von 1 bis 99% die erste Verfahrensstufe unter Druck und ohne Entgasung gefahren wird.

3. Verfahren nach Anspruch 1,
dadurch gekennzeichnet,
daß die Ausgangsmaterialien zur Herstellung von Polyamid aus 60-80% adipinsaurem Hexamethylendiamin und 20 - 40 % Wasser bestehen.

4. Verfahren nach Anspruch 1 oder 2,
dadurch gekennzeichnet,
daß die polymerbildenden Ausgangsmaterialien zur Herstellung von Copolyamid aus 70% adipinsaurem Hexamethylendiamin und 30% ε-Caprolactam bestehen.

5. Vorrichtung zur durchführung des Verfahrens nach Anspruch 1-4,
dadurch gekennzeichnet,
daß dem geschlossen arbeitenden Druckreaktor (8) ein Wärmetauscher (7) vorgeschaltet und mittels beheizter Rohrleitung über eine Druckminder- und Fördereinrichtung (9) und eine Schmelzetrocknungsstrecke (10) ein weiterer Druckreaktor (11) und im folgenden ein Nachkondensationsreaktor (17) nachgeschaltet sind.

## Claims

1. A process for the continuous production of polyamides or copolyamides, the monomeric starting material of which consists of an adipic acid solution of hexamethylene diamine and water or of an adipic acid solution of hexamethylene diamine, water and e-caprolactam,
characterised in that
the first stage of the process is carried out in a sealed vessel under pressure and at temperatures of between 180 and 280 °C and, once this stage has been passed through, the polyamide is then fed to further pressure stage and one or more post-condensation stages, wherein the vaporised water is removed or expelled with inert gas in each case at the beginning of these stages.

2. A process according to claim 1,
characterised in that,
in the production of a copolyamide, the first process stage is carried out under pressure and without degassing with the addition of ε-caprolactam in a proportion of from 1 to 99 %.

3. A process according to claim 1,
characterised in that
60 - 80 % of the starting materials for producing polyamide consist of an adipic acid solution of hexamethylene diamine and 20 - 40 % consist of water.

4. A process according to claim 1 or claim 2,
characterised in that
70 % of the polymer-forming starting materials for producing copolyamide consist of an adipic acid solution of hexamethylene diamine and 30 % consist of ε-caprolactam.

5. A device for carrying out the process according to claims 1 - 4,
characterised in that
a heat exchanger (7) is connected upstream of the pressurised reactor (8) operating under sealed conditions, there being connected downstream a further pressurised reactor (11), by means of heated pipes via a pressure-reducing and conveying device (9) and a melt-drying section (10), and thereafter a post-condensation reactor (17).

## Revendications

1. Procédé pour la production en continu de polyamides ou de copolyamides dont le matériau de départ monomère est constitué par l'hexaméthylènediamine de l'acide adipinique et d'eau ou l'hexaméthylènediamine de l'acide adipinique d'eau et/ou d'ε-caprolactame
caractérisé en ce que l'on conduit une première étape du procédé sous pression à des températures entre 180 et 280°C à l'état fermé et après l'opération on amène ensuite le polyamide à une autre étape de pression et à une ou plusieurs étapes de recondensation, au début de ces étapes l'eau évaporée étant respectivement séparée ou évacuée avec le gaz inerte.

2. Procédé selon la revendication 1, caractérisé en ce que pour la préparation d'un copolyamide sous addition d'ε-caprolactame dans une quantité de 1 à 99% on procède à la première étape opératoire sous pression et sans dégazage.

3. Procédé selon la revendication 1, caractérisé en ce que les matériaux de départ pour la préparation de polyamide consiste en 60-80% d'hexaméthylènediamide de l'acide adipinique et 20-40% d'eau.

4. Procédé selon la revendication 1 ou 2, caractérisé en ce que les matériaux de départ formant le polymère pour la préparation de copolyamide sont constitués par 70% d'hexaméthylènediamine de l'acide adipinique et 30% d'ε-caprolactame.

5. Dispositif pour la conduite du procédé selon la revendication 1-4, caractérisé en ce que
l'on met en place en amont du réacteur (8) travaillant à circuit fermé un échangeur de chaleur (7) et au moyen de la canalisation chauffée par un dispositif de réduction de pression et d'acheminement (9) et un tronçon de séchage par fusion (10) on met en place en aval un autre réacteur sous pression (11) et à la suite un réacteur de recondensation (17).
